# EUROPÄISCHE PATENTSCHRIFT

(11) **EP 1 700 740 B1**
(45) Veröffentlichungstag und Bekanntmachung des Hinweises auf die Patenterteilung: **12.01.2011**
(21) Anmeldenummer: 06003840.3
(22) Anmeldetag: 24.02.2006
(51) Int. Cl.: B60P 1/28

(54) **Kippmulde**
Tipping bucket
Benne basculante

(30) Priorität: 09.03.2005 DE 202005003821 U
(43) Veröffentlichungstag der Anmeldung: 13.09.2006
(73) Patentinhaber: Liebherr-Hydraulikbagger GmbH, 88457 Kirchdorf/Iller (DE)
(72) Erfinder: Westner, Harald, 87700 Memmingen-Eisenburg (DE)
(74) Vertreter: Zinnecker, Armin

(56) Entgegenhaltungen:
- DE-A1- 10 240 799
- US-A1- 2004 026 959
- US-B1- 6 637 808

## Beschreibung

Die Erfindung betrifft eine Kippmulde für ein Transportfahrzeug, insbesondere für den Transport von Schüttgut nach dem Oberbegriff des Hauptanspruchs. Eine solche Kippmulde ist aus der US 2004/0026459 A bekannt.

Der Transport von Schüttgut erfolgt üblicherweise in Kippmulden von Muldenkippern mit nach oben offenem Querschnitt, die halbkreisförmig oder rechteckig sind und rechtwinkelige oder abgerundete Innenecken aufweisen.

Üblicherweise weisen Kippmulden eine flachen Boden und zwei zur Längsachse der Kippmulde parallele Seitenwände auf, die in einem rechten Winkel oder mit abgerundeten Innenecken zusammenlaufen. Eine weitere Wand, die am vorderen Teil quer zur Längsachse der Kippmulde angeordnet ist, schließt diese an ihrem vorderen Ende ab und bildet eine Frontwand. Auf der gegenüberliegenden Seite ist bei einigen Bauformen im oberen Bereich der Kippmulde eine Klappe angelenkt, die bei entsprechendem Öffnen ein Entladen des Schüttguts ermöglicht. Anstelle einer derartigen Klappe kann auch eine sogenannte Schütte vorgesehen sein, die vom Boden ausgehend weg nach oben verläuft und somit ein unbeabsichtigtes Herausfallen des Schüttguts während der Fahrt verhindert.

Um beim Beladen, Transport und Entladen eine hinreichende Steifigkeit und Festigkeit zu gewährleisten, ist die Außenwand der Kippmulde üblicherweise mit Hilfe einer Gruppe von Längs- und Querträgern verstärkt. Diese Außenverstärkungen, die im allgemeinen an den Korpus der Kippmulde angeschweißt sind, erhöhen das Gewicht und die Herstellungskosten wesentlich.

Aufgabe der Erfindung ist es, gattungsgemäße Kippmulden derart weiterzubilden, dass sie ein deutlich reduziertes Eigengewicht bei Beibehaltung der notwendigen Festigkeit haben.

Erfindungsgemäß wird diese Aufgabe durch die Kombination der Merkmale des Anspruchs 1 gelöst. Demnach ist bei einer Kippmulde für ein Transportfahrzeug, insbesondere für den Transport von Schüttgut, die mittels einer Antriebseinrichtung um eine Schwenkachse zwischen einer Auflageposition und einer aufgeschwenkten Entleerposition verschwenkbar ist und die aus einem vorzugsweise aus Blech bestehenden Korpus mit einem Boden, Seitenwänden, einer Frontwand, die die Kippmulde einseitig abschließt, und einer am gegenüberliegenden Ende angeordneten gegenüber dem Boden hochgezogenen Schütte besteht, erfindungsgemäß die Mulde im Querschnitt parabolisch gerundet, wobei sie einen gerundeten Muldenboden, eine gerundete Schütte und einen gerundeten Übergang zwischen Muldenboden und Schütte aufweist.

Aufgrund der parabolischen Muldenform können die Längs- und Querträger, wie sie bei konventionellen Dumpermulden verwendet werden, wegfallen. Hierdurch wird das Eigengewicht der Mulde entscheidend verringert, wodurch die Nutzlast der Dumper-Fahrzeuge erhöht werden kann.

Die parabolische Muldenform stellt eine optimale Form für eine harmonische Spannungsverteilung im Muldenboden, der Schütte und den Seitenwänden in jedem der möglichen Beladungszustände dar.

Bevorzugte Ausgestaltungen der Erfindung ergeben sich aus den sich an den Hauptanspruch anschließenden Unteransprüchen.

Demnach kann die Kippmulde an ihrem oberen Rand im Bereich der Seitenwände und der Frontwand seitlich verbreitert sein. Hierdurch wird zum einen die Festigkeit der Kippmulde insgesamt erhöht. Zum anderen erleichtert dieser verbreiterte Rand auch das Befüllen der Kippmulde mit einem entsprechenden Lader, Bagger oder einem anderen Umschlaggerät.

Besonders vorteilhaft ist die parabolisch gerundete Mulde aus gewalzten Blechen oder mehrfach gekanteten Blechen hergestellt.

Weitere Merkmale, Einzelheiten und Vorteile der Erfindung ergeben sich aus einem in der Zeichnung dargestellten Ausführungsbeispiel. Es zeigen:
- Fig. 1:: eine Darstellung eines Transportfahrzeugs einer Kippmulde nach einer Ausführungsform der vorliegenden Erfindung in gekippter Stellung,
- Fig. 2:: eine perspektivische Darstellung der erfindungsgemäßen Kippmulde in der Ausführungsform gemäß der Fig. 1 in einer perspektivischen Darstel- lung schräg von oben und
- Fig. 3:: eine andere perspektivische Darstellung der Kippmulde schräg von oben.

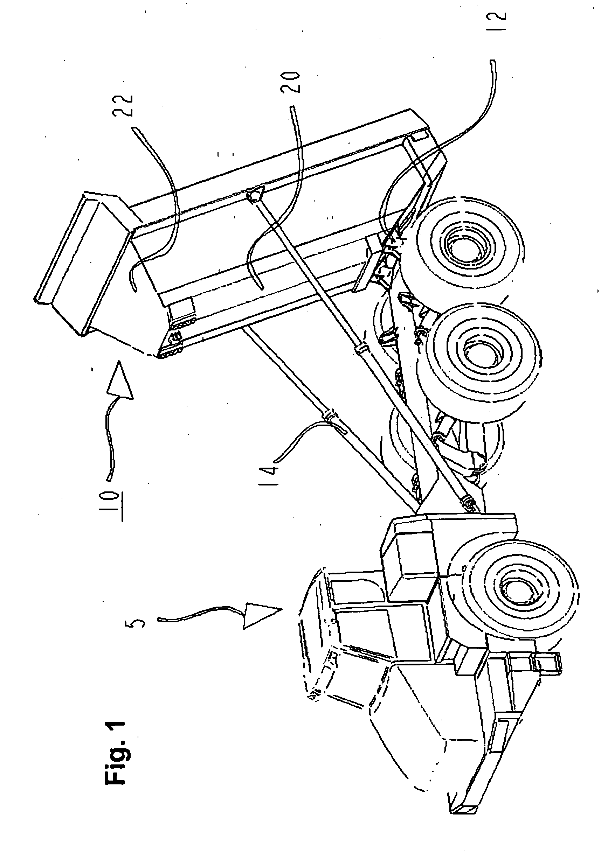

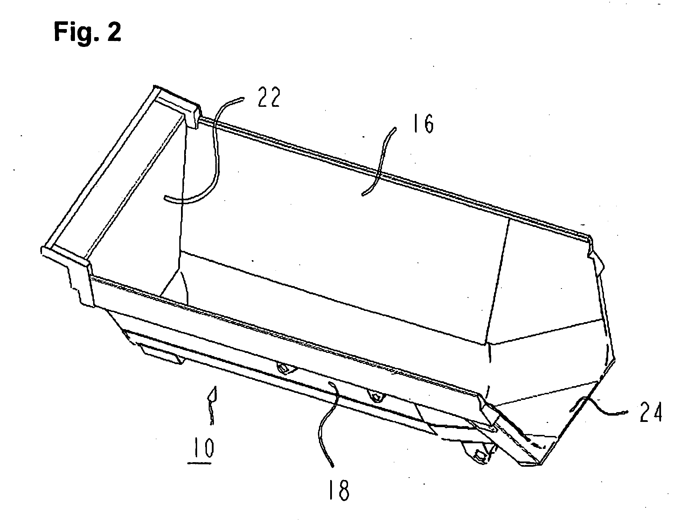

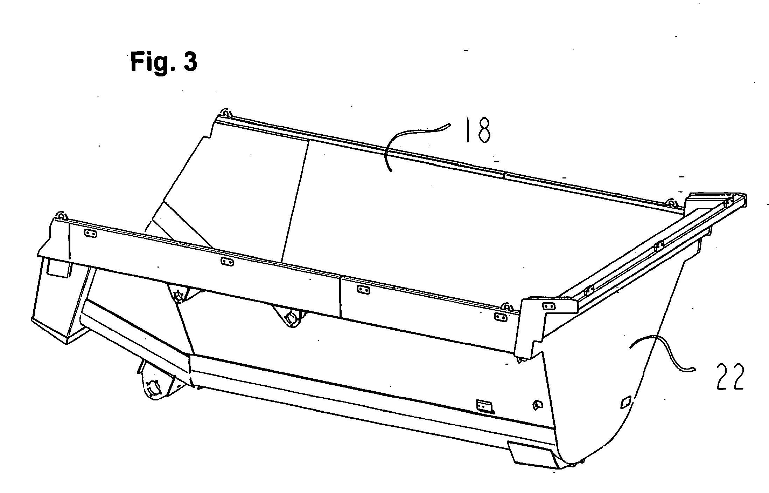

In Fig. 1 ist ein Transportfahrzeug 5 gezeigt, an dessen Fahrwerksende eine Kippmulde 10 um eine Schwenkachse 12 schwenkbar ist. Als Antriebseinrichtungen dienen hierzu Kolbenzylinderanordnungen 14, die einerseits am Transportfahrzeug 5 und andererseits an der Kippmulde 10 angelenkt sind. Die Kippmulde besteht aus einer Blechkonstruktion mit zwei Seitenwänden 16 und 18, einem Boden 20, einer Frontwand 22, die die Kippmulde 10 einseitig abschließt, und einer am gegenüberliegenden Ende der Frontwand 22 angeordneten Schütte 24, die gegenüber dem Boden 22 schräg nach oben verläuft und somit ein ungewolltes Herausfallen des Schüttgutes aus der Mulde verhindert. Wie aus der Fig. 1 und auch den Figuren 2 und 3 zu sehen ist, ist die Mulde im Querschnitt insgesamt parabolisch gerundet ausgeführt, wobei sie einen gerundeten Muldenboden 20, eine gerundete Schütte 24 und einen gerundeten Übergang zwischen dem Muldenboden 20 und der Schütte 24 aufweist.

Aufgrund ihrer Formgebung zeichnet sich die parabolische Mulde durch ein verbessertes Verhalten gegen Verbeulen aus. Das Schüttgut rutscht bei der Verladung in einen flachen Winkel über die Muldenseitenwände. Somit wird sowohl beim Transport wie auch beim Beladen mit Felsgestein, Bauschutt oder dergleichen, dass Einbeulen der Mulde im Bereich der Seitenwände und des Bodens verringert. Durch eine weniger stark verformte bzw. deformierte Blechoberfläche kann nun ungewolltes Anhaften des Fördergutes verhindert werden. Die runde Muldenform verhindert zudem ein Anhaften des Förderguts in den Ecken der Mulden.

Beim Abkippen des Schüttguts aus der Kippmulde wird die Standsicherung des gesamten Transportfahrzeugs durch eine Zwangszentrierung des Fördergutes verbessert. Bei dieser Zwangszentrierung rutscht das Fördergut beim Abkippen aufgrund der runden Formgebung zur Mitte der Mulde automatisch nach. Damit wird insgesamt das Ausschüttverhalten des Schüttguts verbessert.

## Patentansprüche

1. Kippmulde (10) für ein Transportfahrzeug (5), insbesondere für den Transport von Schüttgut, die mittels einer Antriebseinrichtung (14) um eine Schwenkachse (12) zwischen einer Auflageposition und einer aufgeschwenkten Entleerposition verschwenkbar ist, bestehend aus einem vorzugsweise aus Blech bestehendem Korpus mit einem Boden (20), Seitenwänder (16, 18), einer Frontwand (22), die die Kippmulde einseitig abschließt, und einer am gegenüberliegenden Ende angeordneten gegenüber dem Boden hochgezogenen Schütte (24),
**dadurch gekennzeichnet,**
**dass** die Mulde (10) im Querschnitt parabolisch gerundet ist, wobei sie einen gerundeten Muldenboden (20), eine gerundete Schütte (24) und einen gerundeten Übergang zwischen Muldenboden und Schütte aufweist.

2. Kippmulde nach Anspruch 1, **dadurch gekennzeichnet, dass** ihr oberer Rand im Bereich der Seitenwände (16, 18) und der Frontwand (22) seitlich verbreitert ist.

3. Kippmulde nach Anspruch 1 oder 2, **dadurch gekennzeichnet, dass** die parabolisch gerundete Mulde gewalzt oder mehrfach gekantet ist.

## Claims

1. Dumper (10) for a transport vehicle (5), in particular for the transport of bulk material, which can be pivoted by means of a drive device (14) about a pivot axis (12) between a support position and a pivoted-up emptying position, comprising a body preferably made of sheet metal and having a base (20), side walls (16, 18), a front wall (22) which terminates the dumper on one side, and a chute (24) which is arranged at the opposite end and is drawn upwardly with respect to the base, **characterized in that** the dumper (10) is parabolically rounded in cross section, wherein it has a rounded dumper base (20), a rounded chute (24) and a rounded transition between the dumper base and chute.

2. Dumper according to Claim 1, **characterized in that** its upper edge is laterally widened in the region of the side walls (16, 18) and the front wall (22).

3. Dumper according to Claim 1 or 2, **characterized in that** the parabolically rounded dumper is rolled or multiply folded.

## Revendications

1. Benne basculante (10) pour un véhicule de transport (5), en particulier pour le transport de matière en vrac, qui est basculée au moyen d'un dispositif d'entraînement (14) autour d'un axe de pivotement (12) entre une position de support et une position de vidage relevée, comprenant un corps de préférence en tôle avec un fond (20), des parois latérales (16, 18), une paroi avant (22), qui ferme la benne basculante d'un côté, et une goulotte de déversement (24) disposée sur l'extrémité opposée et relevée par rapport au fond,
**caractérisée en ce que**
la benne (10) est arrondie en section en forme de parabole, sachant qu'elle présente un fond de benne (20) arrondi, une goulotte de déversement (24) arrondie et une transition arrondie entre le fond de benne et la goulotte de déversement.

2. Benne basculante selon la revendication 1, **caractérisée en ce que** son bord supérieur est élargi sur le côté dans la zone des parois latérales (16, 18) et de la paroi avant (22).

3. Benne basculante selon la revendication 1 ou 2, **caractérisée en ce que** la benne arrondie en forme de parabole est laminée ou pliée plusieurs fois.
